# EUROPEAN PATENT APPLICATION

(11) **EP 2 221 703 A2**
(43) Date of publication of application: **25.08.2010**
(21) Application number: 09176371.4
(22) Date of filing: 18.11.2009
(51) Int. Cl.: G05D 1/02

(54) **Unmanned boat automatic survey system and unmanned boat automatic survey method**

(30) Priority: 27.11.2008 JP 2008303105
(71) Applicant: Coden Co., Ltd., Tokyo 114-0024 (JP)
(72) Inventor: Koda, Yoshiharu, Tokyo 114-0024 (JP); Koda, Kojiro, Tokyo 114-0024 (JP)
(74) Representative: Fuchs

(57) **Abstract**

The present invention is about an unmanned boat automatic survey device and an unmanned boat automatic surveying method that automatically generate survey routes and automatically survey underwater and water bottom conditions under the survey routes.

Under the present invention, a reference survey line is entered for generating a survey route (S1), and a plurality of survey routes are generated by translating the reference survey line at a fixed distance (32). It then determines the distances of the generated survey routes and instructs a traversing order of the determined survey routes (S3), and causes the unmanned boat to navigate automatically according to the instructed traversing order. It surveys at least underwater or water bottom condition during the navigation (S5), and display and store the surveyed underwater or water bottom condition (S6).

## Description

### Background of the Invention

### Field of the Invention

The invention relates to an unmanned boat automatic survey system and an unmanned boat automatic survey method, in particular to an unmanned boat automatic survey system and an unmanned boat automatic survey method capable of automatically surveying underwater and water bottom conditions by causing an unmanned boat to navigate over a range.

### Description of the Related Art

In order to survey underwater and water bottom conditions of sea, lakes, ponds and rivers, a remote controlled unmanned boat can be used. Such an unmanned boat is typically equipped with a sonar system that radiates ultrasonic waves toward water bottom, catches ultrasonic waves bounced off from water bottom, etc. , to survey underwater and water bottom conditions.

The controlling person controls the unmanned boat from a remote site to survey desired water bottom as described in Publication of Unexamined Patent Application 2005-343391. This enables us to survey underwater and water bottom conditions with ease even in such areas as shallow waters and narrow quay side areas, which are inaccessible with larger manned boats.

As can be seen from the above, conventional unmanned boats can be used for surveying underwater and water bottom conditions with ease even in such areas as shallow waters and narrow quay side areas as they are controlled by operators. However, they were not capable of automatically generating survey routes and make surveys of underwater and water bottom conditions following the routes.

An object of the present invention is to eliminate such a problem of the prior art and to provide an unmanned boat automatic survey system and an unmanned boat automatic survey method capable of automatically generating a survey route and automatically surveying underwater and water bottom conditions under the survey route.

### Summary of the Invention

The unmanned boat automatic survey system according to the present invention is equipped with a GPS mounted on the boat for measuring the present position of the unmanned boat, a reference survey line input unit for entering a reference survey line of the unmanned boat, and a survey route designating unit for designating a survey route of the unmanned boat from the reference survey line.

A navigation control unit controls the navigation of the unmanned boat referencing the present position measured by the GPS and the survey route designated by the survey route designating unit. It is also equipped with a survey unit for surveying at least either underwater condition or water bottom condition, and a storage unit for storing the data of at least either underwater condition or water bottom condition surveyed by the survey unit, the storage unit stores the data of at least either underwater condition or water bottom condition surveyed by the survey unit.

The unmanned boat automatic survey system according to the present invention is equipped with the GPS on board the unmanned boat for measuring the present position of the unmanned boat, a route storage unit for storing a loop-like route that the boat has actually navigated based on the information of the GPS, and a survey route designating unit for designating certain survey routes with directions and at intervals specified within the loop-like stored route.

The navigation control unit controls the navigation of the unmanned boat referencing the present position measured by the GPS and the survey route designated by the survey route designating unit. It is also equipped with a survey unit for surveying at least either underwater condition or water bottom condition, and a storage unit for storing the data of at least either underwater condition or water bottom condition surveyed by the survey unit, the storage unit stores the data of at least either underwater condition or water bottom condition surveyed by the survey unit.

Next, the unmanned boat automatic survey method of this invention comprises a step of entering a reference survey line for setting up a survey route, a step of designating a plurality of survey routes by translating the reference survey line at a fixed interval, a step of determining the distances of the plurality of survey routes and instructing the navigational order of the determined survey routes, a step of causing the unmanned boat to navigate according to the instructed navigational order, a step of surveying at least either underwater condition or water bottom condition during the navigation, and a step of displaying as well as storing at least either underwater condition or water bottom condition being surveyed, thus to display and store either the underwater condition or water bottom condition surveyed.

Also, the unmanned boat automatic survey method of this invention comprises a step of entering a reference survey line for designating a survey route, a step of setting a plurality of survey routes by setting straight lines that extend at a fixed interval perpendicular to the survey line that forms the reference survey line, a step of determining the distances of the plurality of survey routes and instructing the navigational order of the determined survey routes, a step of causing the unmanned boat to navigate according to the instructed navigational order, a step of surveying at least either underwater condition or water bottom condition during the navigation, and a step of displaying as well as storing at least either underwater condition or water bottom condition being surveyed, thus to display and store either the underwater condition or water bottom condition surveyed.

Moreover, the unmanned boat automatic survey method according to the present invention comprises a step of storing the route by actually causing an unmanned boat to navigate along a loop-like route, a step of designating certain survey routes with directions and at intervals specified within the stored route, a step of causing the unmanned boat to navigate according to the specified survey routes, a step of surveying at least either underwater condition or water bottom condition during the navigation, and a step of displaying as well as storing at least either underwater condition or water bottom condition being surveyed, thus to display and store either the underwater condition or water bottom condition surveyed.

Moreover, the unmanned boat automatic survey method according to the present invention comprises a step of storing a loop-like route formed by entering a plurality of points, a step of designating certain survey routes with directions and at intervals specified within the stored route, a step of causing the unmanned boat to navigate according to the specified survey routes, a step of surveying at least either underwater condition or water bottom condition during the navigation, and a step of displaying as well as storing at least either underwater condition or water bottom condition being surveyed, thus to display and store either the underwater condition or water bottom condition surveyed.

### Brief Description of the Drawings

Fig. 1 is a schematic diagram of an unmanned boat automatic survey system according to the present invention.

Fig. 2 is a side cross section view of the unmanned boat.

Fig. 3 is a plan view of the unmanned boat.

Fig. 4 is an external view of a wireless controller system.

Fig. 5 is a block diagram of the unmanned boat and the wireless control system in the first embodiment.

Fig. 6 is an example of the reference survey line in the first embodiment.

Fig. 7 is an example of the survey route in the first embodiment.

Fig. 8 is an action flowchart of the control system shown in Fig. 5.

Fig. 9 is a diagram showing an example image generated based on survey data.

Fig. 10 is a diagram showing an example image of the survey result.

Fig. 11 is an example of the reference survey line in the second embodiment.

Fig. 12 is an example of the survey route in the second embodiment.

Fig. 13 is a block diagram of the wireless control system in the third embodiment.

Fig. 14 is an example of the loop-like survey route in the third embodiment.

Fig. 15 is an example of the survey route in the third embodiment.

Fig. 16 is an example of the survey route in the third embodiment.

Fig. 17 is an action flowchart of the control system shown in Fig. 5 and Fig. 13.

### Detailed Description of the Invention

Four embodiments based on the unmanned boat automatic survey system and the unmanned boat automatic survey method according to the present invention will be described with reference to accompanied drawings. The invention allows us to make underwater and water bottom surveys automatically at designated intervals. Since there are four different methods to do the survey, they will be described as the first through fourth embodiments individually.

### [First embodiment]

The unmanned boat automatic survey system and the unmanned boat automatic survey method to be described as the first embodiment accomplish underwater and water bottom surveys automatically by generating a plurality of survey routes at a fixed interval using an entered reference survey line as a reference, and causing an unmanned boat for automatic survey to navigate automatically along said plurality of survey routes. Since the interval between the adjacent survey routes can be freely designated, a more detailed survey of the water bottom, for example, can be accomplished easily, if so desired, by setting the interval between the routes narrower and causing an unmanned boat to a reciprocating navigation at a narrow interval.

First, let us describe the constitution of the unmanned boat automatic survey system in the first embodiment.

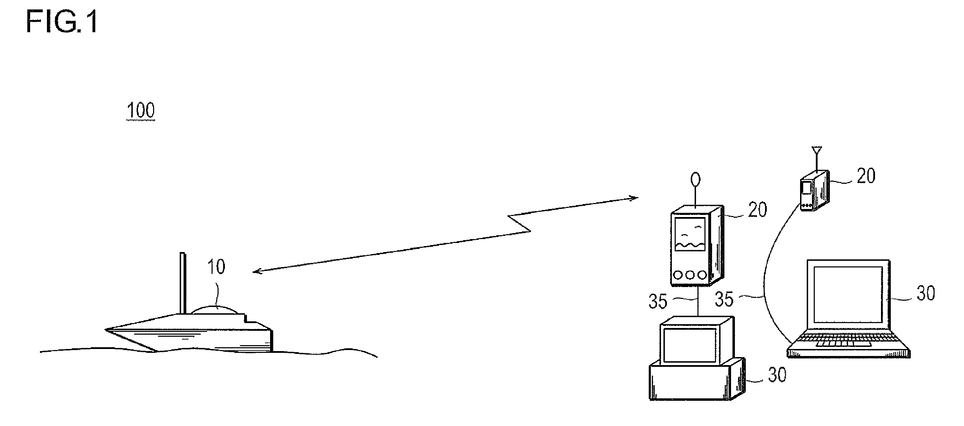

Fig. 1 is a schematic diagram of an unmanned boat automatic survey system according to the present invention.

As can be seen in the drawing, an unmanned boat automatic survey system 100 comprises an automatic survey unmanned boat 10 ("unmanned boat 10"), a remote control wireless controller system 20 ("wireless controller system 20"), and a remote control wireless controller computer 30 ("computer 30"). In an embodiment, the wireless controller system 20 and the computer 30 may consist of a simple wireless device (whose sole function is to give instructions to the unmanned boat 10) and a computer (which controls the unmanned boat 10 through the wireless device). In this case, the wireless controller system 20 having a control function is mounted in the computer. The computer does the calculations relating to the control of the unmanned boat 10 upon receiving the instructions from the wireless device, and then gives the instructions attained from the calculation results. Based on such instructions thereof, it controls the unmanned boat 10.
In the following, the present invention will be illustrated using the example of the unmanned boat automatic survey system 100, which consists of the wireless controller system 20 and the computer 30 independently.

The unmanned boat 10 is constituted in such a way as to be able to communicate mutually with a wireless controller system 20 using radio wave of a specified frequency. As the basic functions of the unmanned boat 10, it has a function of freely traversing (forward, backward, and rotary motions) over water according to the instruction of the operator based on the instruction of wireless controller system 20, and a function to survey underwater and water bottom conditions tracing an automatically generated survey route based on a survey instruction from the wireless controller system 20. The unmanned boat automatic survey system related to the first through fourth embodiments will be described here focusing on the function of making surveys based on the survey instruction from the wireless controller system 20.

The wireless boat 10 is equipped with a GPS for measuring the present position during the navigation, as well as a drive device and a steering device. It is also equipped with survey equipment for surveying underwater and water bottom conditions (such as water temperature, transparency, salinity concentration, position and depth to the water bottom).

The wireless controller system 20 is capable of connecting with the computer 30 via a dedicated connector cable 35, so that it can communicate mutually with the computer 30. Incidentally, it can be constituted in such a way that the wireless controller system 20 and the computer 30 can communicate wirelessly. As the basic functions, they have a function to transmit survey data stored in the wireless controller system 20 to the computer 30 and a function to transmit survey data stored in the computer 30 to the wireless controller system 20.

The wireless controller system 20 is equipped with a liquid crystal or organic EL display, so that the unmanned boat 10 can convert the survey data received from the survey device into images and display the images of underwater and water bottom conditions in real time. It is also possible to obtain survey result stored in the computer 30 and display the survey result.

The wireless controller system 20 has a function to enter the instruction of a reference survey line necessary for underwater and water bottom surveys and a function to generate survey routes from the instruction of the entered reference survey line.

The computer 30 has a function to receive and store survey data transmitted by the wireless controller system 20, a function to analyze the survey data and store the survey result, and a function to transmit the survey result to the wireless controller system 20.

Although the case of the wireless controller system 20, which does not have a function to store the survey data, is described in the above, it can also be constituted in this embodiment in such a way that the wireless controller system 20 has the same function as the computer 30.

The computer 30 is a conventional PC of the general use, and is used primarily for analyzing survey data to acquire underwater and water bottom conditions (e.g., water temperature, transparency, salinity concentration, position and depth to the water bottom). The wireless controller system 20 and the computer 30 can simply be a wireless device and a computer.
In an embodiment, the present invention illustrates the case in which the wireless controller system 20 functions only as the wireless device, not having the function to store the survey data.

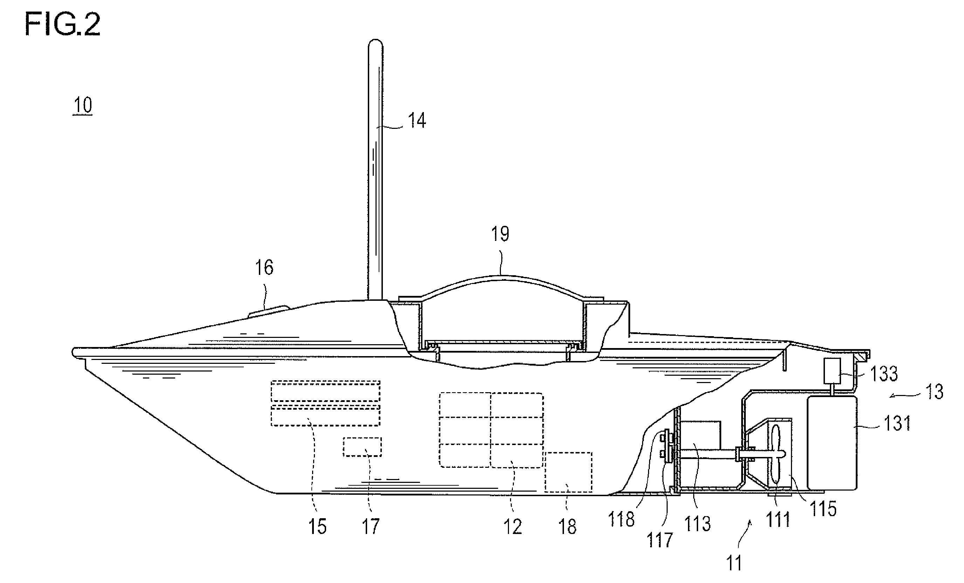

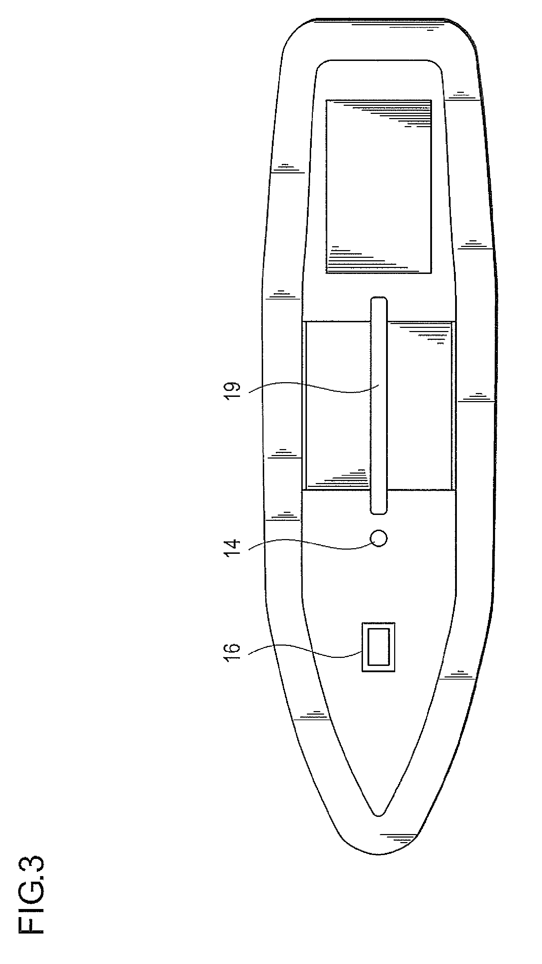

Fig. 2 is a side cross section of the unmanned boat 10 and Fig. 3 is a plan view of the unmanned boat 10.

The unmanned boat 10 is equipped with a drive device 11, a power source 12, a steering device 13, a reception/transmission antenna 14, a control device 15, a GPS antenna 16, a present position computation device 17, survey equipment 18, and a grip handle 19.

The GPS antenna 16 and the present position computation device 17 constitute the GPS that measures the present position of the unmanned boat 10. The drive device 11, the power source 12, the steering device 13, the reception/transmission antenna 14, and the control device 15 constitute the navigation control unit that controls the navigation of the unmanned boat 10.

The drive device 11 has a screw 111, a motor 113 that provides rotating power to the screw 111, and a screw cover 115.

A propeller is attached to one end of the rotating shaft of the screw 111, and a gear 117 is attached to the other end of the rotating shaft. A gear 118 is attached to the rotating shaft of the motor 113, where the gear 117 and the gear 118 are in mesh with a designated gear ratio. The rotating force of the motor 113 is transmitted to the screw 111 efficiently via the gear 117 and the gear 118. As the screw 111 rotates, a forward or backward thrust is provided to the unmanned boat 10.

The motor 113 is connected to the power source 12, which consists of a secondary batter such as lithium ion battery and the like, and appropriate electric power is provided based on the drive instructions and survey instructions transmitted from the wireless controller system 20. Under a normal circumstance, the electric current from the power source 12 is provided to one direction of the motor 113 to propel the unmanned boat 10 forward. The electric current is supplied in the reverse direction of the motor 113 in order to propel the unmanned boat 10 backward, if needed.

The screw 111 is covered by a screw cover 115 to surround the propeller for its protection. The screw cover 115 protects the screw 111 from algae and trashes floating on the water entangling with it.

The electric power 12 supplies electric power not only to the motor 113, but also to the steering device 13, the transmission/reception antenna 14, the control device 15, the GPS antenna 16, the present position computation device 17, and the survey equipment 18 carried on the unmanned boat 10. The supply of electric power from the power source 12 to each of these devices is controlled by the control device 15. The remaining amount of the power source 12 is monitored by the control device 15.

The steering device 13 is provided behind the driving device 11. The steering device 13 has a ladder 131 and a motor 133. One end of the ladder 131 is connected to the rotating shaft of the motor 133 so that the direction of the ladder 131 changes corresponding to the turn of the motor 133. The ladder 131 swings left and right. The ladder 131 changes the direction of the water flow from the screw 111, hence the direction of the navigational direction of the unmanned boat 10. The ladder 131 can swing left or right up to approximately 60 degrees relative to the rotating shaft of the screw 111.

The motor 133 is connected to the power source 12 and electric power is supplied when it is intended to change the direction of the navigation of the unmanned boat 10. The supply of electric power is controlled by the control device 15 in accordance with the navigational instruction or the survey instruction from the wireless controller system 20.

The transmission/reception antenna 14 is mounted vertically on top of the unmanned boat 10. The height of the transmission/reception antenna 14 is chosen to be able to receive the radio wave from the wireless controller system 20 regardless of some waviness of the water surface and not to affect the balance of the unmanned boat 10. The transmission/reception antenna 14 is connected to the control device 15 and transmits the navigational instructions and measuring instructs it receives to the control device 15. The transmission/reception antenna 14 transmits various signals including survey data received from the control device 15 to the wireless controller system 20.

The control device 15 controls various devices carried on the unmanned boat 10. In particular, when the measuring instructions are received, it controls the operations of the drive device 11 and the steering device 13 so that the unmanned boat 10 can precisely trace the survey routes received from the wireless controller system 20. Also connected to the control device 15 are the GPS antenna 16, the present position computation device 17, and the survey equipment 18.

The GPS antenna 16 is an antenna for receiving radio waves transmitted from a plurality of artificial satellites. The radio waves the GPS antenna 16 receives from a plurality of artificial satellites are transmitted to the present position computation device 17. The present position computation device 17 computes the present position of the unmanned boat 10 based on the radio waves from a plurality of artificial satellites. The present position of the unmanned boat 10 is computed based on the computation method which has been generally used, so that its description is omitted.

The survey equipment 18 is a device for surveying underwater and water bottom conditions. The survey equipment 18 is equipped with a ultrasonic vibrator to radiate ultrasonic waves of a specific frequency or ultrasonic waves of different frequencies and to receive ultrasonic waves reflected by water bottom, etc. Objects in the water such as schools of fish and topographic shapes of water bottom can be measured by measuring the time periods until the radiated ultrasonic waves return. Sonar is such a device.

However, the survey equipment 18 is not limited to sonar that uses ultrasonic waves. The survey equipment 18 is also equipped with special sensors, e.g., a temperature sensor, a transparency sensor, salinity concentration sensor, etc. Water temperature, transparency, and salinity concentration can be measured with those sensors. The temperature sensor, transparency sensor, and salinity concentration sensor can be those that are easily available from the market. The survey data obtained by the survey equipment 18 is transmitted to the wireless controller system 20 via the transmission/reception antenna 14.

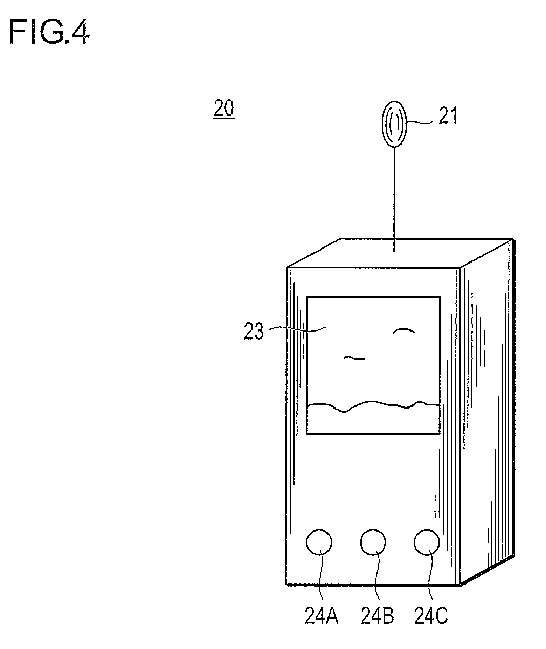

Fig. 4 is an external view of a wireless controller system 20. The wireless controller system 20 has functions of providing navigation and survey instructions to the unmanned boat 10, as well as storing survey data transmitted from the unmanned boat 10. The wireless controller system 20 have functions of entering a reference survey line and generating a plurality of survey routes from the entered reference survey line. It also has functions of designating the generated survey routes by changing the distances of the generated routes and instructing a navigational order for the generated survey routes.

The wireless controller system 20 is equipped with a transmission/reception antenna 21, a display 23, and operating switches 24 (24A - 24C) as shown in the diagram.

The transmission/reception antenna 21 is used for transmitting navigation and survey instructions to the unmanned boat 10 and receiving survey data from the unmanned boat 10.

The display switch 23 is provided on the front of the wireless controller system 20 and is used to display the topographical map of a place being surveyed as well as a reference survey line entered using the operating switches 24 and a plurality of survey routes generated from the reference survey line together with the topographical map of the place being surveyed.

The operating switch 24A functions as a reference survey line input unit for entering the start and end points of the reference survey line by means of entering their latitudes and longitudes, or entering their X and Y-axis coordinates of a two dimensional coordinate system having a specific point used as its origin. The operating switch 24B is used as an indicator for indicating an autonomous traversing of generated survey route, i.e., for issuing a survey instruction, and for indicating a navigational order of routes for the generated survey routes. The operating switch 24C is used as a survey route distance change indicator to be operated for changing the distances of the generated survey routes.

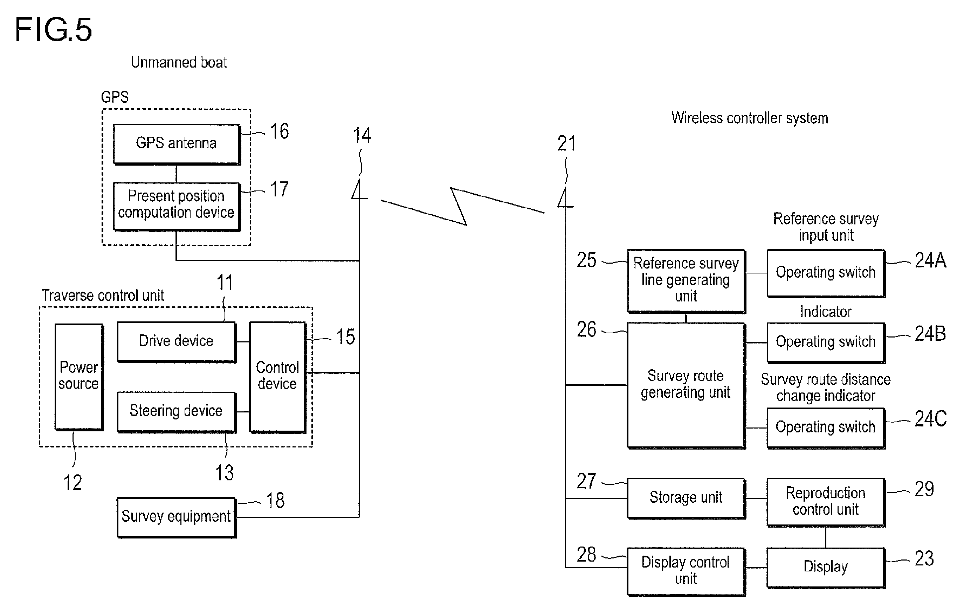

Fig. 5 is a block diagram of the unmanned boat 10 and the wireless control system 20 in the first embodiment.

The unmanned boat 10 carries a GPS consisting of the GPS antenna 16 and the present position computation device 17, a navigation control unit consisting of the power source 12, the drive device 11, the steering device 13 and the control device 15, as well as the survey equipment 18. The controlling device 15 and the survey equipment 18 are connected to the transmission/reception antenna 14 to enable their communications with the wireless controller system 20. The function of each unit that constitutes the unmanned boat 10 is shown in the descriptions of Figs. 2 and 3, so that their detailed descriptions will be omitted here.

The wireless controller system 20 is equipped with the operating switch 24A that functions as an input unit for the reference survey line, the operating switch 24B that functions as the indicator, the operating switch 24C that operates as a conversion system, a reference survey line generating unit 25, a survey route generating u nit 26, a storage unit 27, a display control unit 28, a reproduction control unit 29, and a display 23.

The operating switch 24A is connected to the reference survey line generating unit 25 and is used for entering into the reference survey line generating unit 25 the start and end points of a survey line segment or arc called the reference survey line by means of entering their latitudes and longitudes, or entering their X and Y-axis coordinates of a two dimensional coordinate system having a specific point used as its origin.

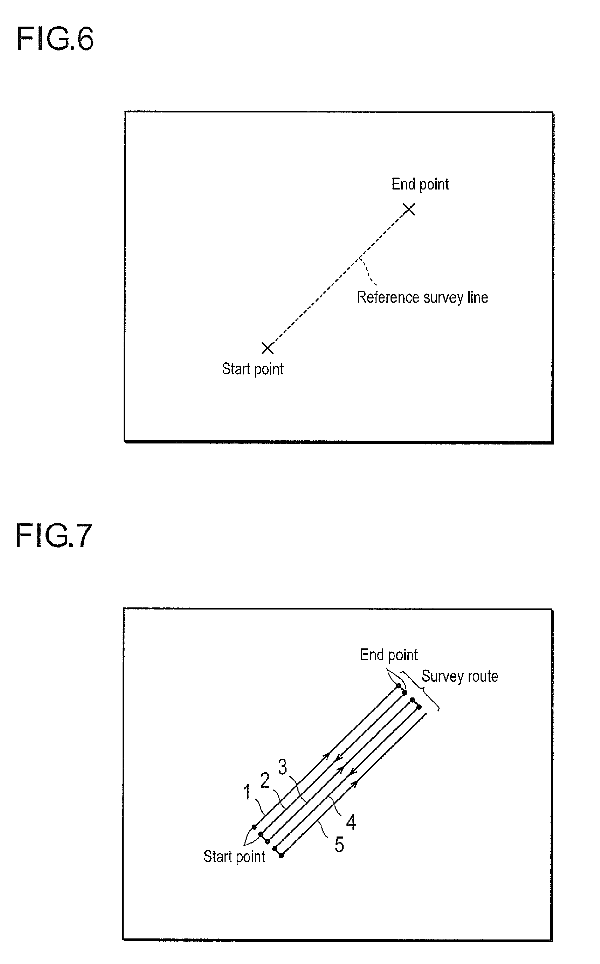

The reference survey line generating unit 25 is, as shown in Fig. 6, for generating a survey line segment or arc having the two coordinates entered by the operating switch 24A as the start and end points. The decision of whether to make the survey line as a straight line segment or an arc as well as what kind of curvature it should have can be designated in the reference survey line generating unit 25, or can be arbitrarily set up by the operation of the operating switch 24A. An example of reference survey line shown in Fig. 6 is a straight line.

The survey route generating unit 26 generates a plurality of survey routes, based on the start and end points of the reference survey line generated by the reference survey line generating unit 25, by translating the reference survey line multiple times at a fixed interval. The decisions to move the reference survey line with what kind of interval and to generate how many survey routes can be preset on the survey route generating unit 26, or can be arbitrarily set up by the operation of the operating switch 24B. Fig. 7 shows five survey routes generated by translating the reference survey line shown in Fig. 6 four times.

The operating switch 24B issues a survey instruction how the unmanned boat 10 should make an autonomous navigation tracing the survey routes generated as shown in Fig. 7, and in which navigational order it should trace the survey routes generated as shown in Fig. 7. In case of Fig. 7, since the navigational order is specified in the order of 1, 2, 3, 4, and 5 from the top, the unmanned boat 10 conducts underwater and water bottom surveys while it is tracing the survey routes in the specified order upon receiving a survey instruction. More specifically, the boat navigates from the start point to the end point of the first survey route, then navigates from the end point of the first survey route to the end point of the second survey route to trace the second survey route to its start point, next navigation from the start point of the second survey route to the start point of the third survey route to trace the third route to its end point, and so on, until it reaches the end point of the fifth survey route. In other words, the generated survey routes are navigated in one continuous voyage without leaving the courses at any point from the start to the end.

The operating switch 24C is intended for changing the distances of the routes generated by the survey route generating unit 26 by overlaying it on the map of the place to be surveyed. It is so constituted in such a way that the survey routes can be selected by the operating switch 24C for elongating or shortening the selected survey routes. For example, it is constituted in such a way that if a particular route is too long and extend beyond the area to be surveyed or too short to cover the entire area to be surveyed, if the distance of the generated survey route is to be used as is, because the shape of the survey place is complex, the distance of the survey route can be changed for each survey route to achieve an optimum survey.

The storage unit 27 stores the survey data concerning underwater and water bottom conditions received from the unmanned boat 10.

The display unit 28 processes the data of the underwater and water bottom conditions received from the unmanned boat 10 in order to display the received underwater and water bottom conditions on the display 23.

The reproduction control unit 29 reproduces the image of underwater and water bottom conditions on the display 23 based on the survey data of underwater and water bottom conditions stored in the storage 27.

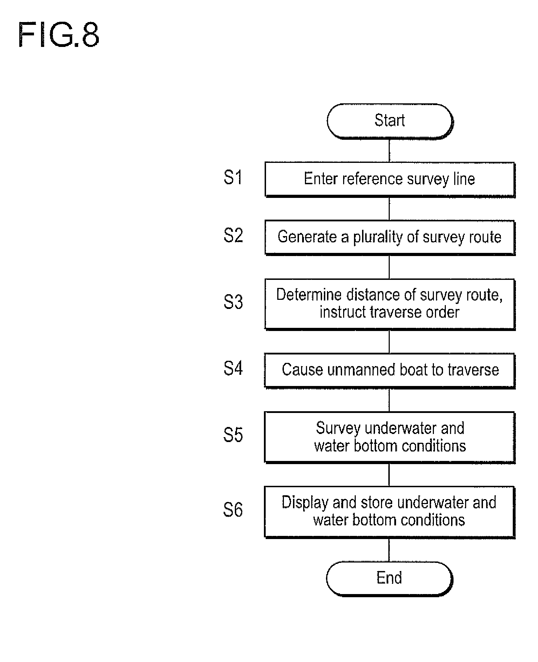

Next, let us describe the operation of the unmanned boat automatic survey system constituted as described above with references to the flowchart shown in Fig. 8. The flowchart is the operation flowchart of the control system shown in Fig. 5 and shows the sequence of the unmanned boat automatic survey method concerning the first embodiment.

### Step S1

First, the map of the survey place is displayed on the display 23. The surveyor enters the latitudes and longitudes of the start point and end point of the reference survey line in the reference survey line generating unit 25 in order to generate a reference survey line in the reference survey line generating unit 25 by operating the operating switch 24A of the wireless controller system 20.

As an alternative, the start point and the end point can be specified by entering their X and Y-axis coordinates of a two dimensional coordinate system. As the latitudes and longitudes of the start and end points of the reference survey line are entered, the reference survey line generating unit 25 generates a survey line connecting the start and end points as shown in Fig. 6. This survey line then is displayed on the map as the reference survey line.

### Step S2

The survey route generating unit 26 generates a plurality of survey routes by translating the reference survey line generated by the reference survey line generating unit 25 at a fixed interval. The generated survey route is displayed being overlaid on the map. Therefore, it is easy to see where the survey is made.

### Step S3

It is constituted in such a way that the navigational order the unmanned boat 10 is supposed to trace the generated plurality of survey routes can be specified. This navigational order can be specified by operating the operating switch 24B. Also, it is constituted in such a way that the distance of each survey route can be adjusted. The distance of a survey route can be changed by operating the operation switch 24C. The change of the survey route can be done while looking at the map on which it is overlaid in the display. As such, the distance of a survey route is determined and the navigational order is specified manually by operating the operating switch 24C and the operating switch 24B respectively.

Although it is shown as an example in the first embodiment that the determination of the distance of a survey route and the determination of the navigational order are manually done, it is also possible to program the standard determination methods in the survey route generating unit, and allow the system to determine the determination of the distance of a survey route and the determination of the navigational order automatically based on the judgment of the places to be surveyed relative to the map.

### Step S4

As a survey instruction is issued by operating the operation switch 24B of the wireless controller system 20, the survey instruction is transmitted to the unmanned boat 10, and the survey routes are transmitted simultaneously in the specified order from the wireless controller system 20.

The transmitted survey route is received by the control device 15, and the control device 15 controls the drive device 11 and the steering device 13 checking the present position by GPS, referencing the present position and the survey route in order to trace the survey route accurately. The control device 15 compensates depending on the traveling speed of the unmanned boat 10 the traveling direction of the unmanned boat 10 estimating the error between the position it takes several seconds from now and the survey route based on the present attitude.

### Step S5

As soon as receiving the survey instruction from the survey controller system 20, the survey equipment 18 of the unmanned boat 10 starts the survey, and transmits the survey data to the storage unit 27 and the display control unit 28 of the wireless controller system 20.

### Step S6

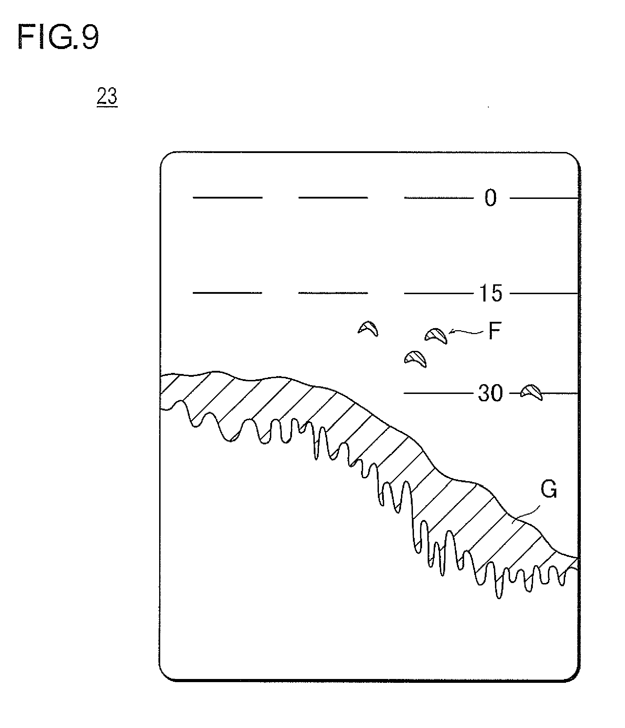

The storage unit 27 stores the survey data in real time. The display control unit 28 processes the survey data and displays it on the display 23. Its image is like the image shown in Fig. 9. According to this image, the hatched area G is how the water bottom looks, while the area F appearing between the water surface and the water bottom represents a school of fish.

As can be seen from the above, the unmanned boat automatic survey system and the unmanned boat automatic survey method according to the first embodiment allows the unmanned boat 10 to navigate the generated plurality of survey routes in the specified navigational order automatically, so that survey data of the area to be surveyed can be easily obtained, providing accurate survey result.

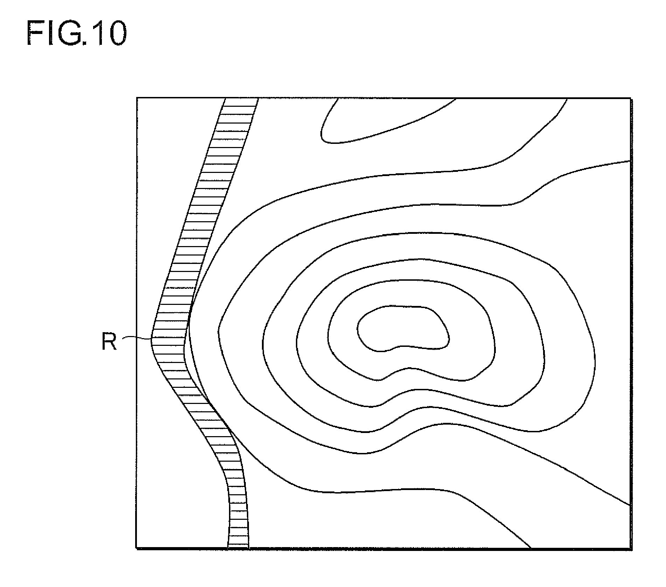

The survey data stored in the storage unit 27 of the wireless controller system 20 is transmitted to the computer 30 to be analyzed, providing in the end the shape of the water bottom represented in a contour line map shown in Fig. 10. The area R, which could not be shown in contour lines and is shown here as a hatched area, represents an area where the depth is changing sharply. Of course the survey equipment 18 is equipped with special sensors, so that it also stores survey data of a specific area such as water temperature, transparency, and salinity concentration. The image indicating the survey result as shown in Fig. 10 can be confirmed by the display 23 of the wireless controller system 20 by connecting the wireless controller system 20 to the computer 30.

Although it is shown as an example in the first embodiment that both the survey route generating unit 26 and the storage unit 27 are provided in the wireless controller system 20, it can also be constituted in such a way that either one of the survey route generating unit 26 and the storage unit 27 is provided in the wireless controller system 20 and the other is provided on the unmanned boat 10. It can also be constituted in such a way that both the survey route generating unit 26 and the storage unit 27 are provided on the unmanned boat 10. The wireless controller system 20 and the computer 30 can simply be a wireless device and a computer.

### [Second embodiment]

The unmanned boat automatic survey system and the unmanned boat automatic survey method to be described as the second embodiment accomplish underwater and water bottom surveys automatically by generating a plurality of survey routes as straight line segments extending at a fixed interval perpendicular to a survey line that forms an entered reference survey line as a reference, and causing the unmanned boat 10 for automatic survey to navigate automatically along said plurality of survey routes. Since the interval between the adjacent survey routes can be freely designated, a more detailed survey of the water bottom, for example, can be accomplished easily, if so desired, by setting the interval between the survey routes narrower and causing the unmanned boat 10 to navigate at a narrower interval.

The difference between the first and the second embodiments is only the method of generating survey routes to be generated by the survey route generating unit 26 provided on the wireless controller system 20. Therefore, the descriptions of the constitutions and operations of those components other than the survey route generating unit 26 remain the same as the unmanned boat automatic survey system described in the first embodiment so that they are omitted here.

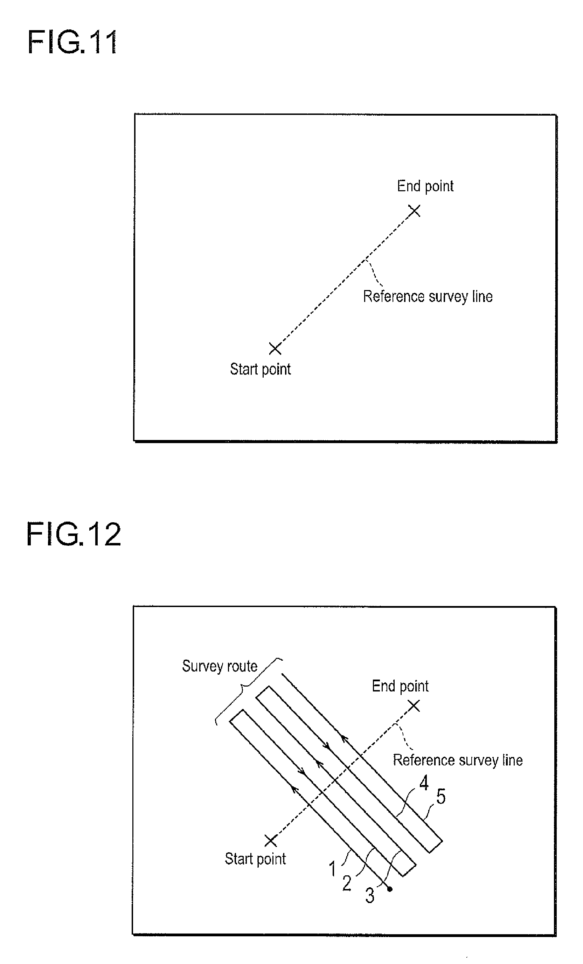

Fig. 11 is a diagram showing an example of a reference survey line generated by the reference survey line generating unit 25, and Fig. 12 is a diagram showing an example of survey routes generated by the survey routes generating unit 26.

The reference measuring line generating unit 25 provided on the wireless controller system 20 shown in Fig. 5 is, as shown in Fig. 11, for generating a survey line segment or arc having the two coordinates entered by the operating switch 24A as the start and end points. The decision of whether to make the survey line as a straight line segment or an arc as well as what kind of curvature it should have can be preset in the reference measuring line generating unit 25, or can be arbitrarily designated by the operation of the operating switch 24A. An example of reference measuring line shown in Fig. 11 is a straight line.

The survey route generating unit 26 generates a plurality of survey routes by generating a plurality of straight lines extending at a fixed interval parallel to each other and perpendicular to a survey line that forms the reference survey line generated by the reference survey line generating unit 25. The decisions of generating survey routes with what kind of interval and how many survey routes can be preset on the survey route generating unit 26, or can be arbitrarily designated by the operation of the operating switch 24B. Fig. 12 shows five survey routes generated at a fixed interval to intersect perpendicularly with the reference survey line shown in Fig. 11.

Same as in the first embodiment, the operating switch 24B issues a survey instruction how the unmanned boat 10 should make an autonomous navigate tracing the survey routes generated as shown in Fig. 12, and in what kind of order of routes it should navigate tracing the survey routes surveyed as shown in Fig. 12. In case of Fig. 12, since the order of routes is designated in the order of 1, 2, 3, 4, and 5 from the bottom, the unmanned boat 10 will conduct underwater and water bottom surveys while it is tracing the survey routes in the specified order upon receiving a survey instruction.

More specifically, the boat navigates from one end to the other end of the first survey route, then navigates to one end of the second survey route closest to the other end point of the first survey route to trace the second survey route to its other end, next navigate from the other end of the second survey route to one end of the third survey route to trace the third survey route to its other end, and so on, until it reaches the end point of the fifth survey route. In other words, the generated survey routes are navigated in one continuous voyage without leaving the courses at any point from the start to the end.

Same as in the first embodiment, it enables to change the distances between the adjacent survey routes generated by the survey route generating unit 26 by overlaying them on the map of the place to be surveyed. The change of distances between the adjacent survey routes can be done by the operating switch 24C. It is so constituted in such a way that the survey routes can be selected by the operating switch 24C for elongating or shortening the selected survey routes. For example, it is constituted in such a way that if a particular route is too long and extend beyond the area to be surveyed or too short to cover the entire area to be surveyed, if the distance of the generated survey route is to be used as is, because the shape of the survey place is complex, the distance of the survey route can be changed for each survey route to achieve an optimum survey.

Although it is shown as an example in the second embodiment, as in the first embodiment, that both the survey route generating unit 26 and the storage unit 27 are provided in the wireless controller system 20, it can also be constituted in such a way that either one of the survey route generating unit 26 and the storage unit 27 is provided in the wireless controller system 20 and the other is provided on the unmanned boat 10. The wireless controller system 20 and the computer 30 can simply be a wireless device and a computer. It can also be constituted in such a way that both the survey route generating unit 26 and the storage unit 27 are provided on the unmanned boat 10.

As described before, the difference between the first and the second embodiments is only the method of generating survey routes to be generated by the survey route generating unit 26 provided on the wireless controller system 20. However, in order to clarify the operation of the unmanned boat automatic survey system of the second embodiment, the operation of the unmanned boat automatic survey system of the second embodiment will be described below with reference to the flowchart of Fig. 8, which was used in the description of the first embodiment. The flowchart is the operation flowchart of the control system shown in Fig. 5 and shows the sequence of the unmanned boat automatic survey method concerning the second embodiment.

### Step S1

First, the map of the survey place is displayed on the display 23. The surveyor enters the latitudes and longitudes of the start point and end point of the reference survey line in the reference survey line generating unit 25 in order to generate a reference survey line in the reference survey line generating unit 25 by operating the operating switch 24A of the wireless controller system 20.

As an alternative, the start point and the end point can be specified by entering their X and Y-axis coordinates of a two dimensional coordinate system. As the latitudes and longitudes of the start and end points of the reference survey line are entered, the reference survey line generating unit 25 generates a survey line connecting the start and end points as shown in Fig. 11. This survey line then is displayed on the map as the reference survey line.

### Step S2

The survey route generating unit 26 generates a plurality of survey routes by generating a plurality of straight lines extending at a fixed interval parallel to each other and perpendicular to a survey line that forms the reference survey line generated by the reference survey line generating unit 25. The generated survey route is displayed being overlaid on the map. Therefore, it is easy to see where the survey is made.

### Step S3

It is constituted in such a way that the order the unmanned boat is to trace the generated plurality of survey routes can be specified. This order of the routes can be specified by operating the operating switch 24B. Also, it is constituted in such a way that the distance of each survey route can be adjusted. The distance of a survey route can be changed by operating the operation switch 24C. The change of the survey route can be done while looking at the map on which it is overlaid in the display. As such, the distance of a survey route is determined and the navigational order is specified manually by operating the operating switch 24C and the operating switch 24B respectively.

Although it is shown that the determination of the distance of an survey route and the determination of the navigational order are manually done in the second embodiment same as in the first embodiment, it is also possible to program the standard determination methods in the survey route generating unit 26, and allow the system to determine the determination of the distance of an survey route and the determination of the navigational order automatically based on the judgment of the places to be surveyed relative to the map.

### Step S4

As a survey instruction is issued by operating the operation switch 24B of the wireless controller system 20, the survey instruction is transmitted to the unmanned boat 10, and the survey routes are transmitted simultaneously in the specified order from the wireless controller system 20. The transmitted survey route is received by the control device 15, and the control device 15 controls the drive device 11 and the steering device 13 checking the present position by GPS, referencing the present position and the survey route in order to trace the survey route accurately. The control device 15 compensates depending on the traveling speed of the unmanned boat 10 the traveling direction of the unmanned boat 10 estimating the error between the position it takes several seconds from now and the survey route based on the present attitude.

### Step S5

As soon as receiving the survey instruction from the survey controller system 20, the survey equipment 18 of the unmanned boat 10 starts the survey, and transmits the survey data to the storage unit 27 and the display control unit 28 of the wireless controller system 20.

### Step S6

The storage unit 27 stores the survey data in real time. The display control unit 28 processes the survey data and displays them on the display 23. Its image is like the image shown in Fig. 9. According to this image, the hatched area G is how the water bottom looks, while the area F appearing between the water surface and the water bottom represents a school of fish.

As can be seen from the above, the unmanned boat automatic survey system and the unmanned boat automatic survey method according to the second embodiment allows the unmanned boat 10 to navigate the generated plurality of survey routes in the specified navigate order automatically, so that survey data of the area to be surveyed can be easily obtained, providing accurate survey result.

The survey data stored in the storage unit 27 of the wireless controller system 20 is transmitted to the computer 30 to be analyzed, providing in the end the shape of the water bottom represented in a contour line map shown in Fig. 10. The area F, which could not be shown in contour lines and is shown here as a hatched area, represents an area where the depth is changing sharply. Of course the survey equipment 18 is equipped with special sensors, so that it also stores survey data of a specific area such as water temperature, transparency, and salinity concentration. The image indicating the survey result as shown in Fig. 10 can be confirmed on the display 23 of the wireless controller system 20 by connecting the wireless controller system 20 to the computer 30.

### [Third embodiment]

The unmanned boat automatic survey system and the unmanned boat automatic survey method to be described as the third embodiment are to cause the unmanned boat 10 to navigate first along a loop-like route surrounding a place to be surveyed, store the loop-like route based on the position data of the GPS acquired during the navigation, generate a plurality of survey routes specified in a direction and intervals specified inside the loop-like route, and cause the unmanned boat 10 to navigate automatically said plurality of survey routes to conduct automatically underwater and water bottom surveys. Since the interval between the adjacent survey routes can be freely designated, a more detailed survey of the water bottom, for example, can be accomplished easily, if so desired, by designating the interval between the routes narrower and causing the unmanned boat 10 to navigate at a narrower interval.

The difference between the third embodiment and the first or second embodiment is that it is constituted in such a way that a survey area can be designated by actually causing the unmanned boat 10 to navigate, and they survey routes can be generated automatically within said survey area. Therefore, the constitution of the wireless controller system 20 is slightly different from the first or second embodiment, and the process sequence of the unmanned boat automatic survey method is different, so that the constitution of the wireless controller system 20 and the process sequence of the unmanned boat automatic survey method are described below based on the attached drawing. The components identical to those of the unmanned boat automatic survey system described in the first embodiment and their operations are omitted.

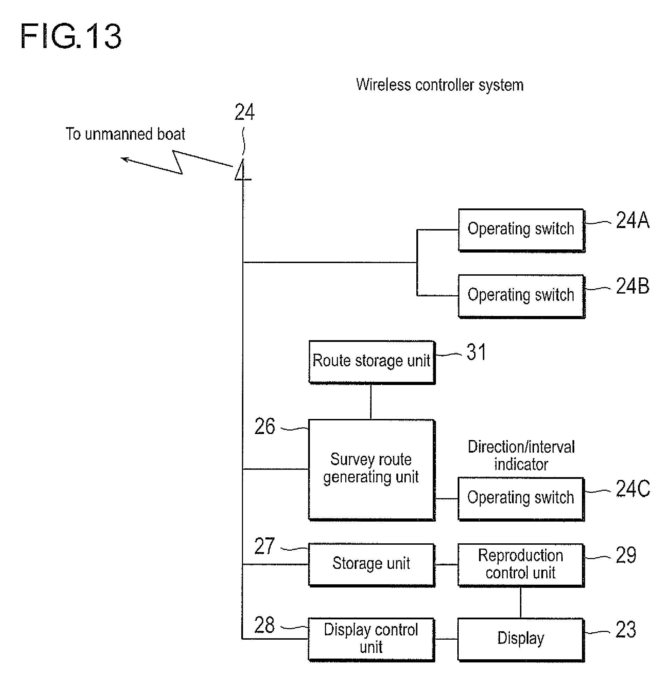

Fig. 13 is a block diagram of the wireless control system 20 in the third embodiment.

The external view of the wireless control system 20 used in the third embodiment is the same as the one shown in Fig. 4. The wireless controller system 20 used in the third embodiment is equipped with operating switches 24A and 24B for providing navigation and survey instructions to the unmanned boat 10 to cause the unmanned boat 10 to navigate freely based on the surveyor's intention, and a route storage unit 31 for storing the route of the unmanned boat 10 based on the position data received from the GPS of the unmanned boat 10.

For example, operating the operating switch 24A causes the drive device 11 of the unmanned boat 10 to operate and causes the unmanned boat 10 to move forward. Also, operating the operating switch 24B causes the steering device 13 of the unmanned boat 10 to operate and causes the moving direction of the unmanned boat 10 to change. In order to designate a surveying area, the surveyor operates the operating switches 24A and 24B to cause the unmanned boat 10 to make a loop-like navigation. Moreover, it is so constituted that a survey instruction is issued from the operating switch 24A in causing the unmanned boat 10 to perform an automatic survey.

The route storage unit 31 stores the route the surveyor caused the unmanned boat 10 to navigate based on the position data transmitted from the GPS of the unmanned boat 10.

The survey route generating unit 26 is intended to generate automatically survey routes inside the loop-like route stored in the route storage unit 31. The decision concerning in which direction and with what kind of an interval the survey routes are to be generated can be designated by the operating switch 24C which causes the direction and interval instructing system to function.

The wireless controller system 20 is provided with a storage unit 27, a display controlling unit 28, a reproduction control unit 29, and a display 23, but the operations and functions of these units are identical to those described in the first embodiment, so that the descriptions of these units are omitted.

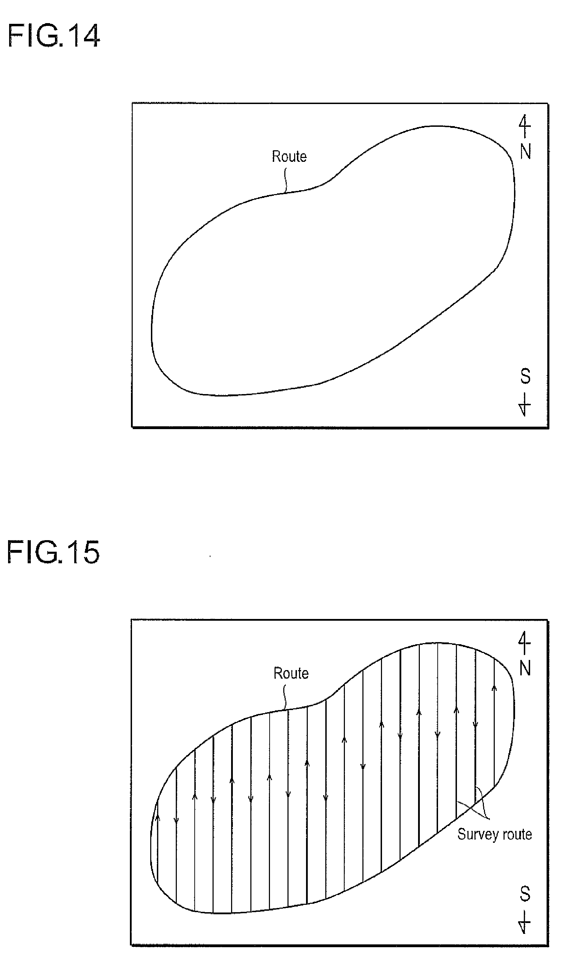

Fig. 14 is a diagram showing an example of a loop-like route stored in the route storage unit 31, and Fig. 15 is a diagram showing an example of survey routes generated by the survey routes generating unit 26.

As shown in Fig. 13, the loop-like route stored in the route storage unit 31 is displayed on the display 23. The survey route generating unit 26 generates the survey route inside this route in the direction with the interval designated using the operating switch 24. For example, if the direction is the north-south direction and the interval is 10 meter, survey routes extending in the north-south direction at a 10 meter interval are automatically generated within the route as shown in Fig. 15.

When the operating switch 24A is operated after the survey routes are automatically generated and a survey instruction is issued, the unmanned boat 10 traces from the survey route situated on the right side to the survey route situated on the left side conducting underwater and water bottom surveys. More specifically, the boat navigates from one end of a survey route situated on the right most position to the other end of the same route, then navigates to the closest end of a survey course situated on the left to trace the survey route to the other end, then navigate to one end of a survey route situated on the left to trace the survey route to the other end, and so on, until it reaches the end point of the survey route situated on the left most position. In other words, the generated survey routes are navigated in one continuous voyage without leaving the courses at any point from the start to the end.

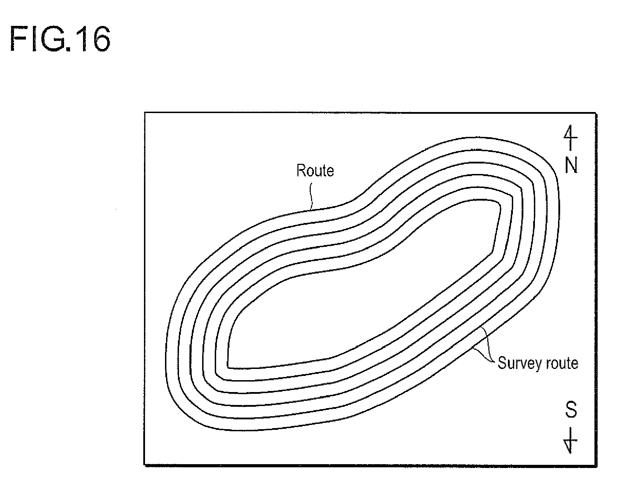

It can also be constituted in such a way as to designate the distance and the tracing order of the generated survey courses automatically as shown in Fig. 15. It can also be constituted in such a way that the survey routes are generated by designating only the interval and adopting similar shapes as shown in Fig. 16.

Although a case of having the survey route storage unit 31, the survey route generating unit 26, and the storage unit 27 to be carried on the wireless controller system 20 is shown as an example in describing the third embodiment, either one of the survey route storage unit 31, the survey route generating unit 26, and the storage unit 27 can be carried on the unmanned boat 10 as well. The wireless controller system 20 and the computer 30 can simply be a wireless device and a computer.

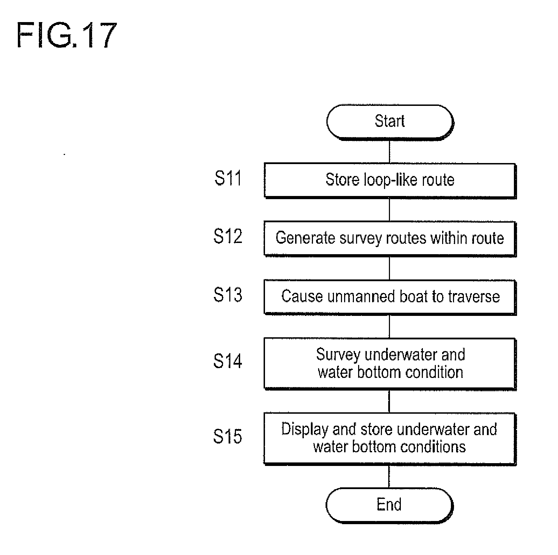

Next, let us describe the operation of the unmanned boat automatic survey system constituted as described above with references to the flowchart shown in Fig. 17. The flowchart is the operation flowchart of the control system of the unmanned boat 10 shown in Fig. 5 and the wireless controller system 20 shown in Fig. 13, and also a flowchart showing the sequence of the unmanned boat automatic survey method concerning the third embodiment.

### Step S11

First, the map of the survey place is displayed on the display 23. The surveyor operates the operating switches 24A and 24B of the wireless controller system 20 to issue navigate instructions to the unmanned boat 10 in order to cause the unmanned boat 10 to make a loop-like navigation in order to specify a survey area. The positions the unmanned boat 10 navigated under the navigational instructions are stored as routes (consisting of a group of points defined at a fixed interval) in the route storage unit 31.

### Step S12

The survey route generating unit 26 generates survey routes as shown in Fig. 15 inside the loop-like route stored in the route storage unit 31 based on the directions and intervals designated by the operating switch 24C. The generated survey route is displayed being overlaid on the map. Therefore, it is easy to see where the survey is made.

### Step S13

As a survey instruction is issued by operating the operation switch 24A of the wireless controller system 20, the survey instruction is transmitted to the unmanned boat 10, and the survey routes are transmitted simultaneously in the specified order from the survey route situated on the right-most side to the route situated on the left-most side by the wireless controller system 20.

The transmitted survey route is received by the control device 15, and the control device 15 controls the drive device 11 and the steering device 13 checking the present position by GPS, referencing the present position and the survey route in order to trace the survey route accurately. The control device 15 compensates depending on the traveling speed of the unmanned boat 10 the traveling direction of the unmanned boat 10 estimating the error between the position it takes several seconds from now and the survey route based on the present attitude.

### Step S14

As soon as receiving the survey instruction from the survey controller system 20, the survey equipment 18 of the unmanned boat 10 starts the survey, and transmits the survey data to the storage unit 27 and the display control unit 28 of the wireless controller system 20.

### Step S15

The storage unit 27 stores the survey data in real time. The display control unit 28 processes the survey data and displays them on the display 23. Its image is like the image shown in Fig. 9. According to this image, the hatched area G is how the water bottom looks, while the area F appearing between the water surface and the water bottom represents a school of fish.

As can be seen from the above, according to the unmanned boat automatic survey system and the unmanned boat automatic survey method of the third embodiment, the area to be surveyed can be designated by actually causing the unmanned boat 10 to navigate it and is surveyed by the unmanned boat 10 traversing a plurality of survey routes generated automatically, so that the survey data of the intended area can be easily obtained to provide an accurate survey result.

The survey data stored in the storage unit 27 of the wireless controller system 20 is transmitted to the computer 30 to be analyzed, providing in the end the shape of the water bottom represented in a contour line map shown in Fig. 10. The area R, which could not be shown in contour lines and is shown here as a hatched area, represents an area where the depth is changing sharply. Of course the survey equipment 18 is equipped with special sensors, so that it also stores survey data of a specific area such as water temperature, transparency, and salinity concentration. The image indicating the survey result as shown in Fig. 10 can be confirmed on the display 23 of the wireless controller system 20 by connecting the wireless controller system 20 to the computer 30.

### [Fourth embodiment]

The unmanned boat automatic survey system and the unmanned boat automatic survey method to be described as the fourth embodiment are to store in advance a loop-like route, which is formed by entering coordinates of a plurality of points, surrounding an area to be surveyed, generate a plurality of survey routes specified in a direction and intervals specified inside the loop-like route, and cause the unmanned boat 10 to navigate automatically said plurality of survey routes to conduct automatically underwater and water bottom surveys. Since the interval between the adjacent survey routes can be freely set up, a more detailed survey of the water bottom, for example, can be accomplished easily, if so desired, by setting the interval between the routes narrower and causing the unmanned boat 10 to navigate at a narrower interval.

The fourth embodiment is different from the third embodiment in that it is not to define a survey area by actually causing the unmanned boat 10 to navigate as in the third embodiment but by storing in advance a loop-like route by means of entering coordinates of a plurality of points, so that survey routes can be generated automatically within said survey area.

Since it is not different from the third embodiment other than the fact that the survey route is stored in advance, the descriptions of processes after the generation of the survey route are omitted here.

While the unmanned boat automatic survey system and the unmanned boat automatic survey method are designed to conduct automatic surveys based on the present position of the survey route detected by GPS, the automatic survey relies on the conventional automatic navigation method (point-to-point, vector control) in controlling the heading of the bow and passing points for tracing the intended navigation routes accurately.

The present invention is capable of automatically generating optimum survey routes in an area to be surveyed, so that it is capable of surveying underwater and water bottom conditions under the survey route automatically.

## Claims

1. An unmanned boat automatic survey system comprising:
a GPS carried on said unmanned boat for measuring the unmanned boat's present position;
a reference survey line input unit for entering said unmanned boat's reference survey line;
a survey route designating unit for designating said unmanned boat's survey routes based on said reference survey line;
a navigation control unit for controlling the navigation of the unmanned boat referencing the present position measured by the GPS and the survey route set up by the survey route designating unit;
a survey equipment for surveying at least underwater or water bottom condition; and
a storage unit for storing at least underwater or water bottom condition surveyed by said survey equipment.

2. The unmanned boat automatic survey system claimed in claim 1, wherein
said GPS, said navigation control unit, and said survey equipment are carried on said unmanned boat;
said reference survey line input unit is carried on a wireless controller system that is capable of communicating with said unmanned boat; and the other is carried on either on said wireless controller system or in the computer which is connected to said wireless controller system, or both said survey route designating unit and said storage unit are either carried on said unmanned boat or on said wireless controller system or in said computer.

3. The unmanned boat automatic survey system claimed in claim 1, wherein
said reference survey line input unit
enters the start and end points of said reference survey line using latitudes and longitudes, or using X and Y-axis coordinates of a two-dimensional coordinate system with a specific point as its origin; and
said survey route designating unit designates survey routes from the entered start and end points of the reference survey line.

4. The unmanned boat automatic survey system claimed in either one of claims 1 through 3, wherein
said survey route designating unit designates a plurality of survey routes by translating said reference survey line at a fixed interval with reference to said reference survey line.

5. The unmanned boat automatic survey system claimed in either one of claims 1 through 3, wherein
said survey route designating unit is **characterized in** designating a plurality of survey routes by designating straight lines extending at a fixed interval and perpendicular to a survey line that forms said reference survey line.

6. The unmanned boat automatic survey system claimed either in claim 1 or 2 further comprising:
an instruction system for instructing an autonomous navigation of the designated survey routes and instructing a navigational order of the designated survey routes, wherein
said navigation control unit controls the navigation of the unmanned boat according to the navigational order instructed by said instruction system while referencing the present position and the designated survey route.

7. The unmanned boat automatic survey system claimed in claim 1 further comprising:
a conversion system for modifying distances of the designated routes.

8. An unmanned boat automatic survey system comprising:
a GPS carried on said unmanned boat for measuring the unmanned boat's present position;
a route storage unit for storing a loop-like route actually navigated based on the information of said GPS;
a survey route designating unit for designating survey routes with designated directions and at a designated interval within a stored loop-like route;
a navigation control unit for controlling the navigation of the unmanned boat referencing the present position measured by the GPS and the survey route set up by the survey route designation unit;
a survey equipment for surveying at least underwater or water bottom conditions, and
a storage unit for storing at least underwater or water bottom condition surveyed by said survey equipment.

9. An unmanned boat automatic survey system comprising:
a GPS carried on said unmanned boat for measuring the unmanned boat's present position;
a route storage unit for storing a loop-like route generated by entering coordinates of a plurality of points;
a survey route designating unit for designating survey routes with designated directions and at a designated interval within a stored loop-like route;
a navigation control unit for controlling the navigation of the unmanned boat referencing the present position measured by the GPS and the survey route designated by a survey route computing unit;
a survey equipment for surveying at least underwater or water bottom conditions, and
a storage unit for storing at least underwater or water bottom condition surveyed by said survey equipment.

10. The unmanned boat automatic survey system claimed in claim 8, wherein
said GPS, said navigation control unit, and said survey equipment are carried on said unmanned boat; and
either one of said route storage unit, said survey route designating unit, and said storage unit is carried on said unmanned boat while others are carried on the wireless controller system or said computer, or all of said route storage unit, said survey route designating unit, and said storage unit are carried on either said unmanned boat , said wireless controller system or said computer.

11. The unmanned boat automatic survey system claimed in either one of claims 8 through 10, wherein
said designated directions and designated interval are instructed by a direction/interval instruction system provided on said wireless controller system.

12. The unmanned boat automatic survey system claimed either in claim 1, 8 or 9 further comprising:
a display control unit for displaying either underwater or water bottom condition surveyed by said surveying equipment on a display of said wireless controller system and a reproduction control unit for reproducing at least underwater or water bottom condition stored in said storage unit.

13. An unmanned boat automatic survey method comprising:
a step of entering reference survey line for designating survey routes;
a step of designating a plurality of survey routes by translating said reference survey line at a fixed distance;
a step of determining distances of a plurality of designated survey routes and instructing simultaneously a navigational order of the established survey routes;
a step of causing an unmanned boat according to the instructed navigational order;
a step of surveying at least underwater or water bottom conditions during its navigation, and
a step of displaying and storing at least underwater or water bottom condition surveyed.

14. An unmanned boat automatic survey method comprising:
a step of entering reference survey line for designating survey routes;
a step of designating a plurality of survey routes by designating straight lines extending at a fixed interval and perpendicular to a survey line that forms said reference survey line;
a step of determining distances of a plurality of designated survey routes and instructing simultaneously a navigational order of the established survey routes;
a step of causing an unmanned boat according to the instructed navigational order;
a step of surveying at least underwater or water bottom conditions during its navigation, and a step of displaying and storing at least underwater or water bottom condition surveyed.

15. An unmanned boat automatic survey method comprising:
a step of storing routes for actually traversing an unmanned boat in a loop-like route;
a step of designating survey routes with designated directions and at a designated interval within the stored loop-like route;
a step of causing the unmanned boat to navigate the designated survey routes;
a step of surveying at least underwater or water bottom conditions during its navigation, and
a step of displaying and storing at least underwater or water bottom condition surveyed.

16. An unmanned boat automatic survey method comprising:
a step for storing a loop-like route generated by entering coordinates of a plurality of points;
a step for designating survey routes with designated directions and at a designated interval within the stored loop-like route;
a step of causing an unmanned boat to navigate the designated survey routes;
a step of surveying at least underwater or water bottom conditions during its navigation, and
a step of displaying and storing at least underwater or water bottom condition surveyed.
